(19) **Europäisches Patentamt**

**European Patent Office**

**Office européen des brevets**

(11) **EP 1 063 245 A1**

(12) **EUROPEAN PATENT APPLICATION**
published in accordance with Art. 158(3) EPC

(43) Date of publication:
**27.12.2000 Bulletin 2000/52**

(51) Int. Cl.[7]: **C08F 214/26**, C08L 27/18,
B65D 1/00, B29C 49/00

(21) Application number: **99939194.9**

(22) Date of filing: **08.03.1999**

(86) International application number:
**PCT/JP99/01125**

(87) International publication number:
**WO 99/46309 (16.09.1999 Gazette 1999/37)**

(84) Designated Contracting States:
**DE NL**

(30) Priority: **10.03.1998 JP 5826798**
**16.12.1998 JP 35766898**

(71) Applicant:
**Daikin Industries, Ltd.**
**Osaka-shi Osaka 530-8323 (JP)**

(72) Inventors:
• **INAOKA, T.,**
**Yodogawa-seisakusho,**
**Daikin Ind. Ltd.**
**Osaka 566-8585 (JP)**
• **ASANO, K.,**
**Yodogawa-seisakusho,**
**Daikin Ind.**
**Osaka 566-8585 (JP)**
• **YAMAGUCHI,Y.,**
**Yodogawa-seisakusho,**
**Daikin Ind.Ltd**
**Osaka566-8585 (JP)**

• **OKANISHI, K.,**
**Yodogawa-seisakusho,**
**Daikin Ind.Ltd**
**Osaka 566-8585 (JP)**
• **YOSHIDA, M.,**
**Yodogawa-seisakusho,**
**Daikin Ind. Ltd**
**Osaka 566-8585 (JP)**
• **SUZUKI, T.,**
**Yodogawa-seisakusho,**
**Daikin Ind. Ltd.**
**Osaka 566-8585 (JP)**
• **SHIOTSUKI,**
**Yodogawa-seisakusho,**
**Daikin Ind. Ltd.**
**Osaka 566-8585 (JP)**

(74) Representative: **HOFFMANN - EITLE**
**Patent- und Rechtsanwälte**
**Arabellastrasse 4**
**81925 München (DE)**

(54) **PERFLUOROCHEMICAL MOLDING MATERIAL AND BLOW-MOLDED CONTAINER**

(57) To provide a large-sized blow-molded container which is used for storing and transferring high purity chemicals, has a capacity of not less than 20 liters, a very smooth inner surface and a uniform wall thickness and is produced by using a molding material comprising a melt-moldable tetrafluoroethylene/perfluoro(alkyl vinyl ether) copolymer and having a melt flow rate of 3 to 50 g/ 10 min and a melt tension of 2 to 20 gf at 370°C. A surface roughness Ra and Rmax of inner surface of the obtained container are not more than 0.07 μm and not more than 5 μm, respectively and a difference in wall thickness of the container is not more than 60 %.

EP 1 063 245 A1

**Description**

TECHNICAL FIELD

The present invention relates to a blow-molded container which is suitable for storing and transferring high purity chemicals and has a smooth inner surface, and a molding material comprising a melt-moldable tetrafluoroethylene/perfluoro(alkyl vinyl ether) copolymer and particularly being suitable as a blow molding material for the container.

Also the present invention relates to a perfluoro copolymer composition having improved melt-moldability, particularly extrusion-moldability and blow-moldability. Further the present invention relates to a blow-molded container and tube which are obtained by molding the above-mentioned composition.

BACKGROUND ART

In the field of production of semiconductors, down sizing and high integration of product and large volume of production are being progressed remarkably. In order to increase yield of products, it is necessary to minimize dusts (fine particles) and impurities in production process.

In the production process of semiconductors, there are risks of contamination due to dusts and impurities everywhere. One of them is a contamination of chemicals. In the production of semiconductors, many kinds of chemicals are used in much amount. For example, in a stacking step of semiconductors, an organic solvent such as acetone, trichloroethylene, methanol, isopropyl alcohol, acetic acid, butyl acetate or monoethanolamine and an inorganic chemical such as sulfuric acid, nitric acid, hydrochloric acid, hydrofluoric acid, ammonia water, hydrogen peroxide, ammonium fluoride, phosphoric acid or buffered hydrofluoric acid are blended as case demands and if necessary, a surfactant is added thereto for use as a solution for wafer cleaning, separation of resist and etching. If such chemicals are contaminated, products are also contaminated even if production environment is clean. Contamination of chemicals arises during a preparation process thereof or at the time of storing or transferring of them. The storing and transferring of chemicals are usually carried out by using a container made of a synthetic resin. Not only contamination at the time of putting the chemicals into the container but also contamination due to the container itself is a major cause for the contamination.

Characteristics required for such a container for chemicals are, for example, as follows.

(1) Material quality:

① Chemical resistance against various chemicals such as strong acid, strong alkali and surfactant and freedom from deterioration with a lapse of time.
② No elution of impurities (particularly metal) and anionic ions from the container itself.

(2) Production: No adherence of contaminants at the stage of production.
(3) Form: Smooth inner surface and thus no adherence of fine particles (for example, fine particles having a particle size of about 0.1 $\mu$m).

Among those characteristics required, in view of material quality, a fluorine-containing resin and polyethylene are used at present and from the viewpoint of chemical resistance, attention is attracted to a fluorine-containing resin. As the fluorine-containing resin, melt-moldable fluorine-containing resins such as tetrafluoroethylene/perfluoro(alkyl vinyl ether) copolymer (PFA), tetrafluoroethylene/hexafluoropropylene copolymer (FEP), ethylene/tetrafluoroethylene copolymer (ETFE), tetrafluoroethylene/ perfluoro(alkyl vinyl ether) /hexafluoropropylene copolymer, and the like have been studied, and some of them are put into practical use.

Also in view of production, rotomolding method, welding sheet lining method, blow molding method, etc. are used. However in the rotomolding method, there are problems that since a cycle time necessary for molding is long and a powder comes into contact with a metal mold for a long period of time, a metal contamination occurs and also since a powder is solidified by melting and cooling under no load, smoothness of an inner surface is poor. In the welding sheet lining method, there are problems that it is impossible to mold into a small container having a narrow neck and at the time of welding, contamination of a sheet arises.

On the contrary, in the blow molding method, a series of steps thereof are continuously carried out, a cycle time necessary for molding is short and contamination can be reduced remarkably by strictly controlling materials of a molding machine and a metal mold, atmosphere and blowing air. Also an inner surface of a container is as smooth as that of an extruded sheet. Thus the blow molding is the most suitable method as a method for molding into a container for highly purified chemicals. The blow molding method is a molding method for melt-extruding a thermoplastic resin downward, surrounding an extruded parison with molds before cooling thereof and then blowing air, thereby swelling the parison so that it comes into close contact with the inner surface of the molds. Alter cooling and solidifying, a molded article is taken out.

However when a usual melt-moldable fluorine-containing resin is used as a molding material, since its density is large and dripping arises remarkably unlike a common thermoplastic resin, only a small container having a capacity of at most 15 liters could be produced by the blow molding as a container for chemicals having the above-mentioned characteristics. On the other hand, with respect to a polyethylene container, those having a capacity of 200 liters or more are available, but are insufficient in cleanness and chemical resistance. Thus a large size fluorine-containing resin container for chemicals which is excellent in such properties is strongly demanded.

On the other hand, a perfluoro resin as a molding material has such characteristics that a melt elasticity is low, a melt fracture easily arises, a moldability is not so good and a specific gravity at melting is high, and therefore it was very difficult to mold the perfluoro resin into a large-sized hollow article.

If a molecular weight of the resin is made higher in order to improve a melt elasticity, a melt-flowability of the resin is lowered, and a moldability is further lowered. In case of polyolefin, there was reported a method for widening a molecular weight distribution to improve a flowability and melt strength. However simply widening a molecular weight distribution lowers largely mechanical properties such as environmental stress cracking resistance (ESCR) and an improvement in a flowability and melt strength is not satisfactory.

Also in case of simply mixing a high molecular weight component and a low molecular weight component by melt-mixing or a two-staged polymerization, there is a limit in a molecular weight of the high molecular weight component which can give a uniformly mixed state so that uniform mixing state cannot be obtained when mixing with a high molecular weight component having a so far different molecular weight, and thus an improvement in flowability and melt strength cannot be satisfactory.

It is an object of the present invention to provide a novel blow-molding material which is obtained from PFA and makes it possible to produce a large-sized container.

The present invention also relates to the container obtained by blow-molding the molding material comprising PFA.

It is an object of the present invention to provide a perfluoro copolymer composition which has a very wide molecular weight distribution and a remarkably improved melt elasticity without sacrificing flowability and mechanical properties and is suitable for extrusion molding into a pipe and tube having a large diameter and thick wall thickness, particularly for blow-molding into a large-sized hollow article such as a tank for feeding chemicals under pressure.

DISCLOSURE OF INVENTION

First the present invention relates to the following first group of inventions.

Namely the present invention relates to the blow-molding material comprising a melt-moldable PFA and having (A) a melt flow rate of 3 to 50 g/ 10 mm and (B) a melt tension of 2 to 20 gf at 370°C.

It is preferable that the above-mentioned PFA molding material has (C) a storage modulus of not less than 200 dyn/cm$^2$ at 330°C at 0.1 rad/sec in parallel plate type viscoelasticity measurement and (D) a ratio of weight average molecular weight Mw/ number average molecular weight Mn of not less than 2.0.

The present invention also relates to the container which is obtained by blow-molding such a molding material comprising PFA and is suitable for storing and transferring high purity chemicals, particularly to the container having a roughness Ra of its inner surface (center line average height) of not more than 0.07 μm, preferably not more than 0.05 μm, further to the large-sized container having a capacity of 20 liters or more. PFA to be used preferably is one obtained by stabilizing unstable group at its molecular end. Further the blow-molded container of the present invention may be a multi-layered container having an innermost layer obtained by blow-molding the molding material comprising PFA.

Further the present invention relates to the 20-liter or more blow-molded container which is obtained by blow-molding the molding material comprising PFA and has a minimum wall thickness of not less than 0.1 mm and an inner surface roughness Rmax (maximum height) of not more than 5 μm, particularly to the blow-molded container suitable for high purity chemicals. It is preferable that the inner surface roughness Ra of the blow-molded container is not more than 0.07 μm and a difference in a wall thickness thereof is not more than 60 %. Further it is possible to produce a large-sized container having a ratio of height to maximum outer diameter of not less than 1.

The present invention also relates to the above-mentioned container with a high purity chemical therein and the method for use of the container for storing and transferring high purity chemicals.

Subsequently the present invention relates to the following second group of inventions.

Namely the present invention relates to the perfluoro copolymer composition meeting (E) the equation: $y > 74x^{-0.99}$, provided that a critical shear rate causing a melt fracture is x and a melt tension is y.

It is preferable that the perfluoro copolymer composition has the following characteristics.

(F) Melt tension of not less than 7 gf, preferably not less than 10 gf.

(G) Melt flow rate (MFR) of 1 to 30 g/ 10 min.

(H) Storage modulus ratio $G'_{100}/G'_{0.01}$ of not more than 7000.

(I) Storage modulus $G'_{0.01}$ of not less than 300 dyn/cm$^2$.

The above-mentioned parameters can be obtained by the following measuring methods.

(i) Critical shear rate causing a melt fracture

Capillograph available from Kabushiki Kaisha Toyo Seiki Seisakusho is used. A sample preheated to 370°C in a cylinder having an inner diameter of 9.55 mm is extruded through a capillary die having an inner diameter of 2 mm and a length of 8 mm by using a plunger having the same diameter as that of the cylinder. In the measurement, lowering of the plunger is started from a low speed without fail and the plunger speed is increased gradually. A maximum plunger speed where it can be recognized that there is no large unevenness over at least 100 mm of the extrudate and that the center line average height of 2.5 mm surface in the direction parallel with extrusion is not more than 2.5 μm by a tracer method is read, and an apparent shear rate calculated by the equation:

$$\dot{\gamma} = \frac{4Q}{\pi r^3}$$

Q: Volume flow rate calculated from plunger lowering speed (mm$^3$ / sec)

r: Radius of capillary die (mm)

is assumed to be a critical shear rate causing a melt fracture. A unit thereof is 1/sec. As the value increases, a period of time until a specified excluded amount is obtained becomes short and drawdown is decreased, and as the value decreases, drawdown is increased reversely.

(ii) Melt tension

A tension (gf) for drawing, at a speed of 1 m/min, a strand extruded at 370°C at an apparent shear rate of 4.56 1/sec through a capillary die of 2 mm diameter × 8 mm length is measured by using Capillograph available from Kabushiki Kaisha Toyo Seiki Seisakusho. As the value increases, drawdown is decreased, and as the value decreases, drawdown is increased.

(iii) Melt flow rate (MFR)

A melt flow rate is measured according to ASTM D-3307 (at 372°C at a load of 5 kg). A unit thereof is g/10 min. As the value increases, environmental stress cracking resistance is lowered, and as the value decreases, moldability is lowered.

(iv) Storage modulus G'

A storage modulus is measured by using RDSII available from Rheometrics Co., Ltd. A sample is held in a 1.5 mm space between the parallel plates having a diameter of 25 mm so that bubbles should not be present therein, and an angular velocity is measured at 330°C at 0.01 rad/sec ($G'_{0.01}$) and 100 rad/sec ($G'_{100}$). A unit thereof is dyn/cm$^2$. The larger the $G'_{0.01}$ value is, the better the drawdown-decreasing property is. The smaller the $G'_{100}$ value is, the better the extrusion-moldability is. A storage modulus ratio $G'_{100}/G'_{0.01}$ represents a molecular weight distribution. The smaller the ratio is, the wider (broader) the molecular weight distribution is.

The perfluoro copolymer having the above-mentioned characteristics can be obtained by mixing two or more perfluoro copolymers or polymerizing a mixture of perfluoro monomers at two stages.

In the present invention, even if kind of monomers to be copolymerized is the same, when the obtained perfluoro copolymer is different in copolymerization ratio of monomers or in average molecular weight from others, they are regarded as different copolymers from each other.

Also the present invention relates to the melt-molding material obtained from the above-mentioned perfluoro copolymer composition, and the blow-molded container and tube (including a pipe, etc.) which are obtained by molding the molding material.

Further the present invention relates to the novel high molecular weight perfluoro copolymer.

BEST MODE FOR CARRYING OUT THE INVENTION

The first group of inventions are firstly explained below.

The molding material of the present invention has the above-mentioned specific melt flow rate (A) and melt tension (B), and further preferably has the specific storage modulus (C) and/or specific Mw/Mn (D). Though various grades of PFA are commercially available, there is no PFA molding material having such characteristics and being suitable for blow-molding into a large size.

PFA is a tetrafluoroethylene (TFE)/perfluoro(alky vinyl ether) copolymer, and a mole ratio of TFE/perfluoro(alky vinyl ether) is 99.7/0.3 to 85/15, preferably 99/1 to 95/5. As the perfluoro(alkyl vinyl ether), preferred is one represented by the formula: $CF_2=CFO(CF_2)nCF_3$ (n = 0 to 4). From the viewpoint of excellent mechanical strength and heat resistance, pefluoro(methyl vinyl ether), pefluoro(ethyl vinyl ether) and pefluoro(propyl vinyl ether) which have n of 0 to 2 are preferred. A preferable number average molecular weight Mn is from 2.0 to 4.0.

The PFA molding material having the above-mentioned characteristics may consist of a single PFA or may be a blend of two or more PFA having different characteristics.

Example of usual method for preparing PFA is a method for polymerizing, for instance, in an aqueous solvent or a perhalogenated solvent (USP 3642742, USP 3635926, JP-A-6-211933). In the present invention, PFA having the above-mentioned characteristics can be prepared by optionally selecting an adding amount and adding method of a radical polymerization initiator and a chain transfer agent.

Also to prepare the PFA molding material having the above-mentioned characteristics by blending two or more PFA having different characteristics, there are, for example, a method for blending PFA having a melt flow rate (A) of 10 to 100 g/ 10 min and a melt tension (B) of less than 2 gf to PFA having a melt flow rate (A) of 0.001 to 3.0 g/ 10 min and a melt tension (B) of not less than 5 gf, and the like. PFA may be mixed in the form of pellet, powder or dispersion, followed by kneading.

In PFA, there remain end groups such as -COOH, $-CH_2OH$ arid $-COOCH_3$ which are derived from a polymerization initiator and a molecular weight control agent. Those unstable end groups are thermally decomposed at melt-molding to be -COF. When -COF comes into contact with a chemical, elution of fluorine ions arises. Therefore it is desirable to use a PFA molding material having a stabilized end group for a container for chemicals.

As a method for stabilizing unstable end groups, known methods can be employed. For example, there are a method for treating with fluorine gas ($F_2$) or ammonia gas to form the end group into $-CF_3$ or $-CONH_2$, a method for heating in the presence of steam or treating with hydrogen ($H_2$) to form the end group into $CF_2H$, and the like. In the present invention, the blow-molding method is used for molding of a container. Therefore by using a gas containing fluorine gas as a blowing gas, molding of a container and stabilizing of unstable end groups in PFA constituting an inner surface of the blow-molded container can be carried out at the same time.

In the present invention it is necessary that the PFA molding material has a melt flow rate (A) of 3 to 50 g/ 10 min and a melt tension of not less than 2 gf at 370°C. PFA which does not meet those requirements cannot be used as a molding material for a chemical container, particularly a large-sized chemical container which is required to have enough stress cracking resistance and smooth inner surface. For example, when the melt flow rate is less than 3 g/ 10 min, a melt fracture occurs at an outlet of mold of an extruder at the time of blow molding, and a surface of a molded article becomes rough. When more than 50 g/ 10 min, sagging of parison increases at blow molding and it becomes very difficult to adjust a wall thickness of the molded article. Also when the melt tension (370°C) is less than 2 gf, a strength of a molten material is insufficient at blow molding, sagging of parison increases and a molded article having uniform wall thickness cannot be obtained. When the material which does not have those characteristics is molded at a very low blow-molding temperature of 320° to 350°C, the problem with sagging of parison can be eliminated. However the obtained molded article has a rough surface and poor stress cracking resistance and is not suitable for a chemical container.

A preferable melt flow rate is 3 to 50 g/ 10 min, particularly 3 to 15 g/ 10 min. A preferable melt tension (370°C) is 2 to 20 gf.

It is further preferable that the PFA molding material of the present invention has the following characteristics.

(C) A storage modulus at 330°C at 0.1 rad/sec in parallel plate type viscoelasticity measurement (hereinafter referred to as "storage modulus") is not less than 200 $dyn/cm^2$.

(D) A ratio of Mw/Mn is not less than 2.0.

The storage modulus (C) is used as an index for an integrated value of molecular weight distribution. The storage modulus in a low frequency range represents a content of high molecular weight component of a polymer composition and is used for evaluation of sagging of a pre-molded article at blow molding. When the storage modulus is less than 200 $dyn/cm^2$, there is a tendency that the melt tension is decreased and sagging of a pre-molded article at blow molding increases. A preferable storage modulus is 200 to 500 $dyn/cm^2$.

A ratio of Mw/Mn is an index for a molecular weight distribution and is used for evaluation of mold-processability at blow molding, sagging of a pre-molded article and mechanical properties of a molded article such as stress cracking resistance. When the Mw/Mn ratio is less than 2.0, sagging of a pre-molded article tends to increase. A preferable Mw/Mn ratio is 2.0 to 5.0.

The PFA molding material of the present invention is suitable particularly as a material for blow molding, and in addition, is useful as a molding material for rotomolding, weld-lining, extrusion molding, injection molding, transfer molding, inflation film extrusion molding and the like.

The present invention also relates to the blow-molded container obtained by blow-molding the PFA molding material having the above-mentioned specific melt flow rate and melt tension.

According to the present invention, a large-sized container having a capacity of not less than 20 liters and a very smooth inner surface which cannot be obtained from conventional PFA molding material can be produced.

As the blow-molding method, there are generally known an extrusion blow-molding method and injection blow-molding method, and either of them may be used as the blow-molding method usable in the present invention. Preferred are extrusion blow-molding methods of continuous extrusion type and accumulator head type which have been employed in producing chemical containers made of polyethylene. Preferred more is the accumulator head type in which an extrusion time of a pre-molded article is shortened by using an accumulator head to inhibit deformation of the pre-molded article and a weight of the premolded article is minimized.

With respect to a chemical container, particularly a chemical container used in semiconductor production process, strict quality is demanded as mentioned above. While a smoothness of inner surface is also related to a molding technique, according to the present invention the requirement for smoothness was satisfied by modifying the molding material.

For example, when PFA having the above-mentioned characteristics (A), (B) and further (C) and (D) is used, particularly in case of a large-sized container, a surface thereof does not become rough and a wall thickness thereof does not become non-uniform. In the present invention, a difference (%) in a wall thickness of the container can be decreased to not more than 60 %.

The present invention can provide a uniform container having a capacity ranging from 0.1 to 1,000 liters, a surface roughness Rmax of not more than 5 μm, a surface roughness Ra of not more than 0.07 μm, particularly not more than 0.05 μm and a minimum wall thickness of not less than 0.1 mm, preferably 1 to 5 mm. In the present invention, it is possible to produce blow-molded containers having a capacity of not less than 20 liters, preferably not less than 50 liters and up to 300 liters which could not be produced with conventional molding materials.

In the blow molding method, as a height of container increases, a difference in wall thickness increases and molding becomes difficult. However according to the present invention, it is possible to provide a relatively high container having a height/maximum outer diameter ratio of not less than 1.

In order to make a surface of the container more smooth, a method for forming a lot of fine spherulites in PFA of the container wall is also effective. Examples of the method for forming fine spherulites are, for instance, a method for adding polytetrafluoroethylene (PTFE) to the PFA molding material (JP-A-7-70397), a method for selecting a specific range of molecular weight distribution and flow rate of a PFA material, thus making crystals generated at cooling of PFA into fine spherulites (JP-A-8-109225), and the like.

The container of the present invention can be used for storing and transferring various chemicals, particularly high purity chemicals of a grade for semiconductor production. Represented examples of chemicals are, for instance, sulfuric acid, hydrochloric acid, ammonia water, hydrogen peroxide, hydrofluoric acid, ammonium fluoride, buffered hydrofluoric acid, phosphoric acid, nitric acid, acetic acid, isopropyl alcohol, n-butyl acetate, monoethanolamine, and the like. The container is also useful as a container for storing and transferring intermediates of medicines and blood.

The thus produced container of the present invention can be used as it is as a container for various chemicals. When the container is used, for example, as a chemical container for semiconductor production, in many cases, it is put in another outer casing so-called container during use. An object of use of the another container is to reinforce and transfer the chemical container. As the another container, those made of metal, FRP, polyethylene, polypropylene, etc. are known.

The container of the present invention may be of multilayered structure comprising two or more layers, in which its innermost layer is made of the above-mentioned PFA molding material by blow molding.

Materials of the layers other than the innermost layer may be the same as or may be different from that of the innermost layer. Examples of the different material are, for instance, PFA or FEP having no characteristics of the present invention; a resin reinforced by adding a filler thereto; PFA or FEP having a reactive group; other known fluorine-containing resins such as ETFE, ECTFE and PVdF; FRP, polyethylene, and the like. Particularly in the blow molding, it is further economical to pulverize again excessive upper and lower portions of a parison and use as a material for an outer layer.

The multi-layered structure may comprise two or three or more layers as far as the innermost layer is made of the PFA molding material of the present invention. As the PFA molding material forming the innermost layer, it is preferable to use the above-mentioned material having stabilized end groups.

A shape of the multi-layered container is the same as that of a single-layered container. With respect to the size of the container, use of the multi-layered structure enhances a strength and durability of the whole container, thus making it possible to make a container size larger and an innermost layer thinner. In case of the multi-layered structure, a total wall thickness of all layers is from about 0.1 mm to about 10 mm, usually from about 1 mm to about 5 mm. Particularly a thickness of the PFA innermost layer can be adjusted to about 0.05 mm to about 2 mm, preferably about 0.1 mm to about 1 mm, and thus lowering of cost and decrease in a weight can be attained.

Unrestricted examples of the layered structure are two-layered structures such as a combination of the end-stabilized PFA having characteristics of the present invention as an inner layer and a non-end-stabilized PFA having characteristics of the present invention, a combination of the end-stabilized PFA having characteristics of the present invention as an inner layer and a non-end-stabilized FEP having characteristics of the present invention and a combination of the end-stabilized PFA having characteristics of the present invention as an inner layer and polyethylene.

Then the second group of inventions are explained below.

Examples of the perfluoro copolymers to be used in the second group of inventions are copolymers prepared by copolymerizing tetrafluoroethylene (TFE) with one or two or more of other perfluoro monomers, for instance, perfluoro(alkyl vinyl ether) (PAVE), hexafluoropropylene, and the like. Particularly preferred are TFE-PAVE copolymer (PFA), TFE-HFP copolymer (FEP) and TFE-PAVE-HFP copolymer. Preferred PAVE are those represented by the formula: $CF_2=CFO(CF_2)_nCF_3$ (n = 0 to 4). For example, there are perfluoro(methyl vinyl ether), perfluoro(ethyl vinyl ether), perfluoro(propyl vinyl ether), and the like.

As one of the methods for preparing the perfluoro copolymer composition of the present invention having the above-mentioned characteristics, there is a method of mixing two or more perfluoro copolymers.

The two or more perfluoro copolymers to be mixed may have the same or different combination of copolymerizing monomers. From the viewpoint of obtaining a more uniformly mixed state, the copolymers having the same combination of copolymerizing monomers are preferred.

The preferred perfluoro copolymer composition is a mixture of (a) the perfluoro copolymer having MFR of 1 to 50 g/ 10 min and (b) the perfluoro copolymer having MFR of not less than 0.01 g/ 10 min and less than 1 g/ 10 min and a storage modulus ratio $G'_{100}/G'_{0.01}$ of not more than 1,000. A weight ratio (a)/(b) is 60/40 to 99.99/0.01.

The copolymer (a) is a copolymer having been generally used as a melt-moldable perfluoro copolymer among the above-mentioned perfluoro copolymers. MFR thereof is 1 to 50 g/ 10 min, preferably 2 to 20 g/ 10 min. When MFR is increased too much, an elastic modulus at melting is lowered and environmental stress cracking resistance is lowered. A storage modulus ratio $G'_{100}/G'_{0.01}$ is usually larger than 1,500, especially from 10,000 to 200,000. When the ratio $G'_{100}/G'_{0.01}$ is not more than 1,500, the copolymer is inferior in environmental stress cracking resistance and besides has the above-mentioned defects of conventional copolymers.

The copolymer (a) may comprise one perfluoro copolymer or a mixture of two or more perfluoro copolymers.

The perfluoro copolymer (b) is a high molecular weight copolymer which is inferior in melt-flowability in case of single use thereof and thus it is difficult to use it in melt-molding. MFR thereof is not less than 0.01 g/10 min and less than 1 g/10 min, preferably 0.1 to 0.5 g/ 10 min. A storage modulus ratio $G'_{100}/G'_{0.01}$ is not more than 1,000, preferably not more than 100. A lower limit thereof is not less than 10. When MFR is not less than 1, elasticity at melting is lowered, and when MFR is too low, uniform mixing with the copolymer (a) becomes difficult. When the storage modulus ratio $G'_{100}/G'_{0.01}$ exceeds 1,000, a molecular weight distribution becomes narrow, uniform mixing with the copolymer (a) becomes difficult and even if the mixing can be conducted, the mixture is inferior in moldabiity. The copolymer (b) also may comprise one perfluoro copolymer or a mixture of two or more perfluoro copolymers. The perfluoro copolymer (b) having a wide molecular weight distribution and a high molecular weight can be prepared by polymerizing with an amount of chain transfer agent being reduced or without using it. Particularly the PFA copolymer having the above-mentioned physical properties is a novel copolymer as mentioned hereinafter.

A mixing ratio of the copolymer (a) to the copolymer (b) in a weight ratio is 60/40 to 99.99 to 0.01, preferably 70/30 to 99/1. In that range, uniform mixing of the both can be achieved.

The copolymers (a) and (b) may be melted and kneaded at 320° to 420°C with a usual kneader, for example, a two screw extruder, kneader, banbury mixer, single screw extruder having a mixing mechanism, and the like.

Another method for preparing the copolymer composition of the present invention is a two-staged polymerization method, in which two or more perfluoro monomers are copolymerized in the presence of the perfluoro copolymer (b) to give the copolymer (a). This two-staged polymerization is carried out by polymerizing the copolymer (a) in a polymerization medium containing dispersed particles of the copolymer (b), and vice versa.

Examples of the perfluoro monomers to be used for the polymerization at the second stage are those mentioned above. The combination and proportion of the monomers may be the same as or different from those of the copolymer (b) as a seed, and may be determined in consideration of characteristics required depending on application.

The composition of the present invention obtained by the two-staged polymerization seems to be in the state that a composite mixture comprising the copolymers (a) and (b) combined complicatedly with each other and a simple mixture thereof are present together. A weight ratio (a) / (b) of the copolymers (a) and (b) in the product prepared by the two-staged polymerization is preferably 99.99/0.01 to 60/40, especially 99/1 to 70/30 from the viewpoint of excellent balance of drawdown characteristic of a parison, flow characteristic and surface smoothness of an extrudate in the blow molding.

As mentioned above, the so-obtained perfluoro copolymer composition of the present invention meets the formula: $y > 74x^{-0.99}$ provided that the critical shear rate (E) causing a melt fracture is represented by x and the melt tension is represented by y. This formula represents a drawdown characteristic of a parison in the blow molding of the composition (resin). When y is not more than $74x^{-0.99}$, the drawdown is increased. A relation of x and y of the copolymer (a) is shown by $y \leqq 74x^{-0.99}$.

Also it is preferable that the melt tension of the composition of the present invention is not less than 7 gf, more preferably not less than 10 gf, especially 15 to 50 gf from the point that a balance between drawdown property and surface smoothness of an extrudate is good.

Further it is preferable that the storage modulus $G'_{0.01}$ at 0.01 rad/sec is not less than 300 dyn/cm$^2$, especially 300 to 3,000 dyn/cm$^2$ from the point that a balance between drawdown property and surface smoothness of an extrudate is good.

Still further it is preferable that MFR is 1 to 30 g/ 10 min, especially 1 to 5 g/ 10 min and the storage modulus ratio $G'_{100}/G'_{0.01}$ is not more than 7,000, especially 1,000 to 5,000 from the viewpoint of maintaining elasticity at melting properly and making environmental stress cracking resistance and melt-moldabiity good.

The ratio $G'_{100}/G'_{0.01}$ is an index for the molecular weight distribution and represents a ratio of extruding property $G'_{100}$ of parison to drawdown property $G'_{0.01}$ of parison in actual blow molding. As another index for the molecular weight distribution, Polymer Engineering of Science, 29(1989), p645 describes a measuring method for a tetrafluoroethylene/hexafluoropropylene copolymer. However non-linear method of least square is used as a calculation method, and therefore an obtained value cannot be used as an index for a bimodal mixture.

The perfluoro copolymer composition of the present invention has excellent melt-moldability, can be used as a melt-molding material, is free from melt fracture at melt-molding and gives a molded article having uniform wall thickness at high productivity.

Examples of the usable molding method are various melt-molding methods such as a blow molding method, extrusion molding method and vacuum compression molding method.

To the molding material may be added usual additives optionally in a proper amount. Examples of the additives are, for instance, a filler, pigment, nucleating agent for foaming, nucleating agent for minimizing a spherulite size, and the like.

The present invention further relates to a blow molded container obtained by blow-molding the molding material of the present invention. Since the molding material of the present invention is excellent in moldability and melt tension, sagging and fracture can be inhibited at the time of blow molding and a large-sized container having a uniform wall thickness can be produced.

Also a tube being free from waviness and unevenness on its surface and having a smooth surface and uniform wall thickness can be produced through extrusion molding at high productivity.

Also molded articles such as an inflation film having a uniform wall thickness and foamed article uniformly expanded and having a small cell diameter can be easily produced by using the molding material of the present invention.

As mentioned above, among the perfluoro copolymers (b), PFA comprising 85 to 99.7 % by mole of TFE and 0.3 to 15 % by mole of at least one selected from the group consisting of PAVE represented by the formula: $CF_2=CFO(CF_2)_nCF_3$ (n = 0 to 4) and HFP and having a heat absorption peak in measurement with DSC in a range of 230° to 360°C, MFR of not less than 0.01 g/ 10 min and less than 1 g/ 10 min, especially from 0.1 to 0.5 g/ 10 min, a storage modulus $G'_{0.01}$ of not less than 1,000 dyn/cm$^2$, especially 10,000 to 1,000,000 dyn/cm$^2$ and a storage modulus ratio $G'_{100}/G'_{0.01}$ of not more than 1,000, especially 10 to 100 is a novel copolymer.

Such a novel PFA can be obtained by emulsion-polymerizing or suspension-polymerizing TFE and PAVE. At the time of polymerizing, a chain transfer agent is not added or added in a small amount, for example, in an amount of not more than 1 % by weight based on the whole monomers, and thus PFA having a high molecular weight and a wide molecular weight distribution can be obtained. With respect to other polymerization conditions (polymerizing temperature, polymerizing pressure, polymerizing time, polymerization initiator, etc.), known conditions can be used. The storage modulus ($G'_{0.01}$) is a parameter relating to the molecular weight distribution. The larger the storage modulus is, the more the content of high molecular component contributing to drawdown-decreasing property is increased.

When using such a novel PFA as the copolymer (b) and combining it with PFA as the copolymer (a) having the above-mentioned properties to give the perfluoro copolymer composition of the present invention, it is possible to obtain the molding material particularly excellent in drawdown resistance and melt-moldability and the blow-molded container and tube which are excellent in uniformity in wall thickness and environmental stress cracking resistance.

With respect to the method for mold-processing into the container and tube of the second group of inventions, the methods explained in the first group of inventions can be applied thereto.

The present invention is then explained by means of examples, but is not limited to them.

Examples 1 to 2 and Comparative Examples 1 to 3 relate to the inventions of the first group, and Preparation Examples 1 to 4, Comparative Preparation Examples 1 to 2, Examples 3 to 9 and Comparative Examples 4 to 6 relate to the inventions of the second group.

Each property adopted in the present invention was measured by the following methods.

(Melt flow rate)

To be determined according to ASTM D-3307.

(Melt tension)

A tension for drawing, at a speed of 1 m/min, a strand extruded at 370°C at a shear rate of 4.56/sec from a capillary die of 2 mm diameter × 10 mm length is measured by using Capillograph available from Kabushiki Kaisha Toyo Seiki Seisakusho.

(Storage modulus)

A storage modulus is measured by using RDSII available from Rheometrics Co., Ltd. A sample is held in a 1.5 mm space between the parallel plates of 25 mm diameter so that bubbles should not be present therein, and the measurement is made at 330°C at a frequency of 0.1 rad/sec.

(Mw/ Mn)

The above-mentioned storage modulus is measured by using the frequency as a variable, and approximate calculation is made according to the method described in Polymer Engineering of Science, 29 (1989), p645.

(Surface roughness Ra and Rmax)

Measurement is made automatically on 2.5 mm surface of a sample at a pick-up speed of 0.3 mm/sec with a diamond pick-up having a needle end of 2 μmR by using a surface roughness meter (Surfcom 470A) available from Tokyo Seimitsu Kabushiki Kaisha. The surface roughness Ra and Rmax are a center line average height and maximum height, respectively which are prescribed in JIS B 0601-1982.

(Difference in wall thickness)

A maximum wall thickness (mm) and minimum wall thickness (mm) of a blow-molded container except a portion at which molds were engaged were measured with a dial gauge, and a difference in wall thickness was calculated by the following equation.

$$\text{Difference in wall thickness (\%)} = \frac{\text{Maximum wall thickness (mm) - Minimum wall thickness (mm)}}{\text{Maximum wall thickness (mm)}} \times 100$$

Usually when using a blow molding machine in which a parison is extruded from the top of a metal mold and air is blown into the mold from the bottom of the mold, the bottom of the parison is clamped by molds to make a mouth of the container and the top of the parison is made into a bottom of the container. In that case, a corner of the bottom of the container is liable to become the thinnest, and the upper side wall portion of the container is liable to become the thickest. Therefore a difference in wall thickness is calculated by measuring wall thicknesses of those portions.

EXAMPLE 1

(Preparation of PFA molding material)

No. 1 PFA (perfluoro(propyl vinyl ether) content: 5 % by weight, melt flow rate: 14.2 g/ 10 min, melt tension: 1.2 gf, storage modulus: 110 dyn/cm$^2$, Mw/Mn: 1.8) powder and No.2 PFA (perfluoro(propyl vinyl ether) content: 5 % by weight, melt flow rate: 2.0 g/ 10 min, melt tension: 8.1 gf, storage modulus: 2,800 dyn/cm$^2$, Mw/Mn: 2.3) powder were dry-blended in a weight ratio of 55/45 and uniformly kneaded with a two screw extruder to give pellets. A melt flow rate, melt tension, storage modulus and Mw/Mn of the obtained PFA molding material were 4.8 g/ 10 min, 3.8 gf, 400 dyn/

cm$^2$ and 2.1, respectively.

(Blow molding of container)

A 20-liter container (maximum outer diameter: 300 mm, height: 455 mm) was blow-molded with the obtained PFA molding material at 370°C at an injection time of 3 seconds by using a blow molding machine (of accumulator type), 150 mm mold and 147 mm mandrel.

Melt fracture did not occur on an extrusion port of a parison, and the parison was transparent.

Appearance of the obtained container was good. A surface roughness Ra and Rmax of its inner surface were 0.04 μm and 1.24 μm, respectively. A minimum wall thickness was 1.75 mm and a difference in wall thickness was 35 %.

EXAMPLE 2

(Preparation of PFA molding material)

A 1,280-liter glass-lined autoclave was charged with 380 liters of deoxidized water, was evacuated and was charged with 300 kg of perfluorocyclobutane. A temperature inside the autoclave was maintained at 35°C. Then the autoclave was charged with 9.4 kg of perfluoro(propyl vinyl ether) and 5.1 kg of methanol and then tetrafluoroethylene was introduced under pressure with stirring to raise the inside pressure up to 5.8 kgf/cm$^2$G. Subsequently the autoclave was charged with 142 g of di-n-propylperoxydicarbonate to initiate the polymerization. Since the pressure lowered with advance of the polymerization, while maintaining the polymerization pressure at 5.8 kgf/cm$^2$G by additionally feeding tetrafluoroethylene under pressure, 0.75 kg each of perfluoro(propyl vinyl ether) was introduced 16 times depending on an amount of tetrafluoroethylene introduced under pressure. Also when 50 % of the intended yield was obtained, 18 kg of methanol was additionally introduced under pressure, thus the polymerization was continued for 15 hours. After the polymerization, a product in the autoclave was taken out, and 279 kg of polymer powder was obtained.

The obtained PFA molding material contained 3.5 % by weight of perfluoro(propyl vinyl ether), and its melt flow rate, melt tension, storage modulus and Mw/Mn were 5.2 g/ 10 min, 5.0 gf, 500 dyn/cm$^2$ and 2.3, respectively.

(Blow-molding of container)

The PFA molding material was blow-molded into a 20-liter container (maximum outer diameter: 300 mm, height: 455 mm) in the same manner as in Example 1.

Melt fracture did not occur on an extrusion port of a parison, and the parison was transparent.

Appearance of the obtained container was good. A surface roughness Ra and Rmax of its inner surface were 0.04 μm and 2.22 μm, respectively. A minimum wall thickness was 1.88 mm and a difference in wall thickness was 52 %.

COMPARATIVE EXAMPLE 1

A PFA molding material (perfluoro(propyl vinyl ether) content: 5.0 % by weight, melt flow rate: 2.0 g/ 10 min, melt tension: 8.1 gf, storage modulus: 1,800 dyn/cm$^2$, Mw/Mn: 2.3) was blow-molded in the same manner as in Example 1 into a 20-liter container (maximum outer diameter: 300 mm, height: 455 mm).

Melt fracture occurred on an extrusion port of a parison, and the parison was white and opaque.

An outer surface of the obtained container was rough in the form of crater resulting from the melt fracture. A surface roughness Ra and Rmax of its inner surface were 0.07 μm and 3.80 μm, respectively. A minimum wall thickness was 2.11 mm and a difference in wall thickness was as small as 23 %. On its inner surface there was a large waviness which is supposed to have occurred due to non-uniform stretching.

COMPARATIVE EXAMPLE 2

A PFA molding material (perfluoro(propyl vinyl ether) content: 5.0 % by weight, melt flow rate: 14.2 g/ 10 min, melt tension: 1.2 gf, storage modulus: 110 dyn/cm$^2$, Mw/Mn: 1.8) was blow-molded in the same manner as in Example 1 into a 20-liter container (maximum outer diameter: 300 mm, height: 455 mm).

Melt fracture did not occur on an extrusion port of a parison, and the parison was transparent.

Appearance of the obtained container was good, but a difference in wall thickness was as large as 76 %, and the container was not practicable. A wall thickness at an upper part of the container was 0.57 mm, and surface roughness Ra and Rmax of its inner surface were 0.04 μm and 0.84 μm, respectively.

COMPARATIVE EXAMPLE 3

A PFA molding material (perfluoro(propyl vinyl ether) content: 3.5 % by weight, melt flow rate: 12.7 g/10 min, melt tension: 1.2 gf, storage modulus: 120 dyn/cm$^2$, Mw/Mn: 1.7) was blow-molded in the same manner as in Example 1 into a 20-liter container (maximum outer diameter: 300 mm, height: 455 mm).

Melt fracture did not occur on an extrusion port of a parison, and the parison was transparent.

Appearance of the obtained container was good, but a difference in wall thickness was as large as 72 %, and the container was not practicable. A wall thickness at an upper part of the container was 0.69 mm, and surface roughness Ra and Rmax of its inner surface were 0.05 μm and 0.91 μm, respectively.

PREPARATION EXAMPLE 1

(Preparation of perfluoro copolymer (b))

A 4-liter glass-lined autoclave was charged with 780 g of deionized water, and after the inside thereof was replaced with nitrogen gas sufficiently, 600 g of perfluorocyclobutane was introduced therein. After a temperature in a system was adjusted to 25°C, 30 g of perfluoro(propyl vinyl ether) (PPVE), 10 g of TFE and 6 g of di(ω-hydrodecafluoroheptanoyl) peroxide (DHP) were added in this order to initiate polymerization at 0.25 MPaG of a pressure in the system. Since the inside pressure lowered with advance of the polymerization, TFE was added to maintain the inside pressure at 0.25 MPaG. Every time when 40 g of TFE was added, 2 g of PPVE was added. One hour after, the polymerization was terminated, and 195 g of PFA was obtained.

A content of PPVE in the obtained PFA was 1.35 % by mole.

Table 1 shows a heat absorption peak of PFA by DSC, MFR, G'$_{100}$/G'$_{0.01}$ and melt tension which were measured by the above-mentioned methods and Mw/Mn calculated from a storage modulus.

PREPARATION EXAMPLE 2

(Preparation of perfluoro copolymer (b))

Polymerization was carried out under the same polymerization conditions as in Preparation Example 1 except that initial charge amounts of PPVE and DHP were 10 g and 3 g, respectively. Eight hours after, the polymerization was terminated and 205 g of PFA was obtained. A content of PPVE in the obtained PFA was 1.58 % by mole.

Physical properties of PFA are shown in Table 1.

PREPARATION EXAMPLE 3

(Preparation of perfluoro copolymer (b))

Polymerization was carried out under the same polymerization conditions as in Preparation Example 1 except that 30 g of PPVE was initially charged in the lump, an inside pressure in the polymerization system was 0.44 MPaG and PPVE was not charged additionally. One hour after, the polymerization was terminated and 246 g of PFA was obtained. A content of PPVE in the obtained PFA was 1.35 % by mole.

Physical properties of the obtained PFA are shown in Table 1.

PREPARATION EXAMPLE 4

(Preparation of perfluoro copolymer (b))

A 4-liter glass-lined autoclave was charged with 1,040 g of deionized water, and after the inside thereof was replaced with nitrogen gas sufficiently, 800 g of perfluorocyclobutane was introduced therein. After a temperature in a system was adjusted to 35°C, 55.1 g of PPVE, 153 g of TFE and 1.7 g of PERLOYL NPP-50M (hydrocarbon type polymerization initiator available from NOF Corporation) were added in this order to initiate polymerization at 0.83 MPaG of a pressure in the system. Since the inside pressure lowered with advance of the polymerization, TFE was added to maintain the inside pressure at 0.83 MPaG. Every time when 45 g of TFE was added, 2.3 g of PPVE was added. 3.4 Hours after, the polymerization was terminated, and 295 g of PFA was obtained. A content of PPVE in the obtained PFA was 1.11 % by mole.

Physical properties of the obtained PFA are shown in Table 1.

COMPARATIVE PREPARATION EXAMPLE 1

Polymerization was carried out under the same polymerization conditions as in Preparation Example 4 except that an adding amount of PERLOYL NPP-50M was 0.2 g and 8 g of methanol as a chain transfer agent was added. Twenty hours after, the polymerization was terminated and 500 g of PFA was obtained. A content of PPVE in the obtained PFA was 1.54 % by mole.

Physical properties of the obtained PFA are shown in Table 1.

COMPARATIVE PREPARATION EXAMPLE 2

A 500-liter glass-lined autoclave was charged with 157 kg of deionized water, and after the inside thereof was replaced with nitrogen gas sufficiently, 123 kg of 1,2-dichlorotetrafluoroethane was introduced therein. After a temperature in a system was adjusted to 15°C, 4.9 kg of PPVE was introduced and TFE was fed until a pressure inside the system became 0.23 MPaG. Then 120 g of DHP was added to initiate polymerization. Since the inside pressure lowered with advance of the polymerization, TFE was added to maintain the inside pressure at 0.23 MPaG. Every time when 8.2 kg of TFE was added, 0.3 kg of PPVE was added. Thirty-nine hours after, the polymerization was terminated, and 112 kg of PFA was obtained. A content of PPVE in the obtained PFA was 0.34 % by mole.

Physical properties of the obtained PFA are shown in Table 1.

TABLE 1

| Physical properties | Preparation Example | | | | Comparative Preparation Example | |
|---|---|---|---|---|---|---|
| | 1 | 2 | 3 | 4 | 1 | 2 |
| Heat absorption peak (°C) | 312.1 | 310.4 | 309.6 | 307.9 | 306.0 | 322.3 |
| MFR (g/ 10 min) | 0.9 | 0.23 | 0.28 | 0.04 | 0.12 | <0.01 |
| Storage modulus | | | | | | |
| $G'_{100}$ (dyn/cm$^2$) | $2.4 \times 10^6$ | $3.2 \times 10^6$ | $3.9 \times 10^6$ | $8.0 \times 10^6$ | $8.0 \times 10^6$ | Unmeasurable |
| $G'_{0.01}$ (dyn/cm$^2$) | $2.9 \times 10^4$ | $1.1 \times 10^5$ | $4.9 \times 10^4$ | $8.0 \times 10^4$ | $3.9 \times 10^3$ | - |
| $G'_{100}/G'_{0.01}$ | 83 | 29 | 81 | 100 | 2100 | - |
| Mw/Mn | 7.1 | 11.9 | 13.2 | 7.4 | 4.9 | - |

EXAMPLE 3

A mixture of NEOFLON PFA AP-231SH (PFA available from DAIKIN INDUSTRIES, LTD., MFR: 2.1 g/ 10 min, $G'_{100}$: $5.5 \times 10^6$ dyn/cm$^2$, $G'_{0.01}$: $1.3 \times 10^2$ dyn/cm$^2$, $G'_{100}/G'_{0.01}$: 42,000) as the perfluoro copolymer (a) and PFA prepared in Preparation Example 1 as the perfluoro copolymer (b) in a weight ratio (a)/(b) of 75/25 was poured in a mixer (R-60H available from Kabushiki Kaisha Toyo Seiki Seisakusho), the temperature of which had been adjusted to 370°C, followed by melt-kneading at 30 rpm for ten minutes to give a uniform resin composition.

MFR, storage modulus, a ratio thereof, melt tension and critical shear rate causing melt fracture of the obtained composition were measured. The results are shown in Table 2.

EXAMPLES 4 to 8 and COMPARATIVE EXAMPLES 4 to 6

Melt-kneading was carried out in the same manner as in Example 3 except that the perfluoro copolymers (a) and (b) shown in Table 2 were used in amounts shown therein, to give resin compositions.

Physical properties of the obtained compositions are shown in Table 2.

EXAMPLE 9

A 3-liter glass-lined autoclave was charged with 780 g of deionized water and then 91 g of PFA prepared in Preparation Example 1, and after the inside a system was replaced with nitrogen gas sufficiently, 600 g of perfluorocyclobutane was introduced therein. After a temperature in the system was adjusted to 35°C, 30 g of PPVE was introduced and TFE was fed until a pressure inside the system became 0.57 MPaG. Then 2.6 g of PERLOYL NPP-50M was added to initiate polymerization. Since the pressure inside the system lowered with advance of the polymerization, TFE was added to maintain the pressure inside the system at 0.57 MPaG. 4.2 Hours after, the polymerization was terminated, and 274 g of PFA subjected to two-staged polymerization was obtained. A content of PPVE in the obtained PFA subjected to two-staged polymerization (in the whole PFA) was 1.31 % by mole.

Physical properties of PFA subjected to two-staged polymerization were measured in the same manner as in Example 3.

The results are shown in Table 2.

TABLE 2

| | Example | | | | |
|---|---|---|---|---|---|
| | 3 | 4 | 5 | 6 | 7 |
| Perfluoro copolymer (a) | PFA *1 | PFA *1 | PFA *1 | PFA *2 | PFA *3 |
| MFR (g/10 min) | 2.1 | 2.1 | 2.1 | 11.4 | 5.5 |
| $G'_{0.01}$ (dyn/cm$^2$) | $1.3 \times 10^2$ | $1.3 \times 10^2$ | $1.3 \times 10^2$ | $1.1 \times 10$ | $1.0 \times 10^2$ |
| $G'_{100}/G'_{0.01}$ | 42000 | 42000 | 42000 | 12000 | 27000 |
| Perfluoro copolymer (b) | Prep. Ex. 1 | Prep. Ex. 2 | Prep. Ex. 3 | Prep. Ex. 4 | Prep. Ex. 2 |
| MFR (g/10 min) | 0.9 | 0.23 | 0.28 | 0.04 | 0.23 |
| $G'_{100}/G'_{0.01}$ | 83 | 29 | 81 | 100 | 29 |
| (a)/(b)  (weight ratio) | 75/25 | 75/25 | 75/25 | 75/25 | 95/5 |

- continued -

| Physical properties of composition | | | | | |
|---|---|---|---|---|---|
| MFR (g/10 min) | 1.95 | 1.30 | 0.78 | 2.24 | 4.8 |
| Critical shear rate x causing melt fracture (1/sec) | 11.4 | 15.2 | 7.6 | 22.8 | 30.4 |
| Melt tension y (gf) | 13 | 29 | 23 | 18 | 8.9 |
| $74x^{-0.99}$ (= y) | 6.7 | 5.0 | 9.9 | 3.3 | 2.5 |
| Storage modulus | | | | | |
| $G'_{100}$ (dyn/cm$^2$) | $3.1 \times 10^6$ | $4.1 \times 10^6$ | $3.3 \times 10^6$ | $2.4 \times 10^6$ | $2.4 \times 10^6$ |
| $G'_{0.01}$ (dyn/cm$^2$) | $2.4 \times 10^3$ | $9.0 \times 10^3$ | $5 \times 10^3$ | $5 \times 10^3$ | $4.9 \times 10^2$ |
| $G'_{100}/G'_{0.01}$ | 1292 | 456 | 660 | 480 | 4900 |
| Mw/Mn | 3.2 | 3.1 | 2.8 | 3.2 | 2.4 |

- continued -

| | Example | | Comparative Example | | |
|---|---|---|---|---|---|
| | 8 | 9 | 4 | 5 | 6 |
| Perfluoro copolymer (a) | PFA *3 | | PFA *1 | PFA *2 | PFA *1 |
| MFR (g/10 min) | 5.5 | | 2.1 | 11.4 | 2.1 |
| $G'_{0.01}$ (dyn/cm$^2$) | $1.0 \times 10^2$ | PFA subjected to two-staged polymerization | $1.3 \times 10^2$ | $1.1 \times 10$ | $1.3 \times 10^2$ |
| $G'_{100}/G'_{0.01}$ | 27000 | | 42000 | 12000 | 42000 |
| Perfluoro copolymer (b) | Prep. Ex. 2 | | Com. Prep. Ex.1 | Prep. Ex. 1 | Com. Prep. Ex. 2 |
| MFR (g/10 min) | 0.23 | | 0.12 | 0.28 | < 0.01 |
| $G'_{100}/G'_{0.01}$ | 29 | | 2100 | 81 | Unmeasurable |
| (a)/(b)   (weight ratio) | 90/10 | 67/33 | 75/25 | 50/50 | 91/9 |

- continued -

EP 1 063 245 A1

- continued -

| Physical properties of composition | | | | | |
|---|---|---|---|---|---|
| MFR (g/10 min) | 4.0 | 2.05 | 0.87 | 1.63 | |
| Critical shear rate x causing melt fracture (1/sec) | 30.4 | 11.4 | 3.0 | 0.76 | Uniform kneading could not be done. |
| Melt tension y (gf) | 13 | 15 | 20 | 28 | |
| $74x^{-0.99}$ (= y) | 2.5 | 6.7 | 24.9 | 97 | Unevenness occurred on a surface of extrudate. |
| Storage modulus | | | | | |
| $G'_{100}$ (dyn/cm$^2$) | $2.4 \times 10^6$ | $3.2 \times 10^6$ | $5.2 \times 10^6$ | $2.7 \times 10^6$ | |
| $G'_{0.01}$ (dyn/cm$^2$) | $1.4 \times 10^3$ | $2.6 \times 10^3$ | $6.0 \times 10^2$ | $1.2 \times 10^4$ | |
| $G'_{100}/G'_{0.01}$ | 1700 | 1231 | 8700 | 167 | |
| Mw/Mn | 2.5 | 3.2 | 2.9 | 4.0 | |

PFA *1: NEOFLON PFA AP-231SH (available from DAIKIN INDUSTRIES, LTD.)
PFA *2: NEOFLON PFA AP-211SH (available from DAIKIN INDUSTRIES, LTD.)
PFA *3: NEOFLON PFA AP-221 (available from DAIKIN INDUSTRIES, LTD.)

INDUSTRIAL APPLICABILITY

According to the inventions of the first group, a large-sized blow-molded container which can be used suitably for storing and transferring high purity chemicals and has a very smooth inner surface and a uniform wall thickness, and a PFA blow molding material for the container can be provided.

According to the inventions of the second group, a perfluoro type melt-moldable material excellent in melt-moldability can be provided.

**Claims**

1. A container obtained by blow-molding a molding material comprising melt-moldable tetrafluoroethylene/perfluoro(alkyl vinyl ether) copolymer and having (A) a melt flow rate of 3 to 50 g/ 10 min and (B) a melt tension of 2 to 20 gf at 370°C.

2. The container of Claim 1 which is used as a container for high purity chemicals.

3. The container of Claim 1 or 2, wherein a surface roughness Ra (center line average height) of its inner surface is not more than 0.07 μm.

4. The container of any of Claims 1 to 3 which is a large-sized container having a capacity of not less than 20 liters.

5. The container of any of Claims 1 to 4, wherein the tetrafluoroethylene/perfluoro(alkyl vinyl ether) copolymer is a tetrafluoroethylene/perfluoro(alkyl vinyl ether) copolymer having stabilized groups at its molecular end.

6. The container of any of Claims 1 to 5 which is a multilayered container having an innermost layer obtained by blow-molding the molding material comprising the tetrafluoroethylene/perfluoro(alkyl vinyl ether) copolymer of Claim 1.

7. A blow-molded container which is produced by blow-molding a molding material comprising tetrafluoroethylene/perfluoro(alkyl vinyl ether) copolymer and has a capacity of not less than 20 liters, a minimum wall thickness of not less than 0.1 mm and a surface roughness Rmax (maximum height) of its inner surface of not more than 5 μm.

8. The container of Claim 7, wherein a surface roughness Ra (center line average height) of its inner surface is not more than 0.07 μm.

9. The container of Claim 7 or 8, wherein a ratio of its height to its maximum outer diameter is not less than 1.

10. The container of any of Claims 1 to 9, wherein a difference in wall thickness thereof is not more than 60 %.

11. The container of any of Claims 7 to 10 which is a multilayered container having an innermost layer obtained by blow-molding the molding material comprising the tetrafluoroethylene/perfluoro(alkyl vinyl ether) copolymer.

12. The container of any of Claims 7 to 11 which is used as a container for high purity chemicals.

13. The container of any of Claims 1 to 12 containing a high purity chemical.

14. Use of the container of any of Claims 1 to 12 for storing and transferring high purity chemicals.

15. A blow molding material comprising melt-moldable tetrafluoroethylene/perfluoro(alkyl vinyl ether) copolymer and having (A) a melt flow rate of 3 to 50 g/10 min and (B) a melt tension of 2 to 20 gf at 370°C.

16. The blow molding material of Claim 15, wherein (C) a storage modulus in parallel plate type viscoelasticity measurement at 330°C at 0.1 rad/sec is not less than 200 dyn/cm$^2$.

17. The blow molding material of Claim 15 or 16, wherein (D) a weight average molecular weight Mw/number average molecular weight Mn ratio is not less than 2.0.

18. A perfluoro copolymer composition meeting (E) the equation: $y > 74x^{-0.99}$, provided that a critical shear rate causing a melt fracture is x and a melt tension is y.

**19.** The composition of Claim 18, wherein (F) a melt tension is not less than 7 gf.

**20.** The composition of Claim 18, wherein (F) a melt tension is not less than 10 gf.

**21.** The composition of any of Claims 18 to 20, wherein (G) a melt flow rate is 1 to 30 g/ 10 min and (H) a storage modulus ratio $G'_{100}/G'_{0.01}$ is not more than 7000.

**22.** The composition of any of Claims 18 to 21, wherein (I) a storage modulus $G_{0.01}$ is not less than 300 dyn/cm$^2$.

**23.** The composition of any of Claims 18 to 22 which is a mixture of two or more perfluoro copolymers.

**24.** The composition of Claim 23 which is a mixture of (a) a perfluoro copolymer having a melt flow rate of 1 to 50 g/ 10 min and (b) a perfluoro copolymer having a melt flow rate of not less than 0.01 g/ 10 min and less than 1 g/ 10 min and a storage modulus ratio $G'_{100}/G'_{0.01}$ of not more than 1,000, in a weight ratio (a)/(b) of 60/40 to 99.99/0.01.

**25.** The composition of any of Claims 18 to 22, wherein the perfluoro copolymer is obtained by preparing the perfluoro copolymer (b) having a melt flow rate of not less than 0.01 g/10 min and less than 1 g/ 10 min and a storage modulus ratio $G'_{100}/G'_{0.01}$ of not more than 1,000 through polymerization and then copolymerizing two or more perfluoro monomers in the presence of said polymer (b).

**26.** The composition of any of Claims 18 to 25, wherein the perfluoro copolymer is a copolymer of tetrafluoroethylene with at least one selected from the group consisting of perfluoro(alkyl vinyl ether) and hexafluoropropylene.

**27.** The composition of Claim 24 or 25, wherein the perfluoro copolymer (b) comprises 85 to 99.7 % by mole of tetrafluoroethylene and 0.3 to 15 % by mole of at least one selected from the group consisting of perfluoro(alkyl vinyl ether) represented by the formula: $CF_2=CFO(CF_2)_nCF_3$ (n = 0 to 4) and hexafluoropropylene and has a heat absorption peak in a range of 230° to 360°C in measurement with DSC, a melt flow rate of not less than 0.01 g/ 10 min and less than 1 g/10 min, a storage modulus $G'_{0.01}$ of not less than 1,000 dyn/cm$^2$, and a storage modulus ratio $G'_{100}/G'_{0.01}$ of not more than 1,000.

**28.** A melt-molding material comprising the perfluoro copolymer composition of any of Claims 18 to 27.

**29.** A blow-molded container obtained by blow-molding the melt-molding material of Claim 28.

**30.** A tube obtained by melt-molding the melt-molding material of Claim 28.

**31.** A perfluoro copolymer which comprises 85 to 99.7 % by mole of tetrafluoroethylene and 0.3 to 15 % by mole of at least one selected from the group consisting of perfluoro(alkyl vinyl ether) represented by the formula: $CF_2=CFO(CF_2)_nCF_3$ (n = 0 to 4) and hexafluoropropylene and has a heat absorption peak in a range of 230° to 360°C in measurement with DSC, a melt flow rate of not less than 0.01 g/ 10 min and less than 1 g/ 10 min, a storage modulus $G'_{0.01}$ of not less than 1,000 dyn/ cm$^2$, and a storage modulus ratio $G'_{100}/G'_{0.01}$ of not more than 1,000.

# INTERNATIONAL SEARCH REPORT

| International application No. |
|---|
| PCT/JP99/01125 |

**A. CLASSIFICATION OF SUBJECT MATTER**
Int.Cl$^6$ C08F214/26, C08L27/18, B65D1/00, B29C49/00

According to International Patent Classification (IPC) or to both national classification and IPC

**B. FIELDS SEARCHED**

Minimum documentation searched (classification system followed by classification symbols)
Int.Cl$^6$ C08F214/26, C08L27/18, B65D1/00, B29C49/00

Documentation searched other than minimum documentation to the extent that such documents are included in the fields searched
Jitsuyo Shinan Koho     1926-1999    Toroku Jitsuyo Shinan Koho    1994-1999
Kokai Jitsuyo Shinan Koho   1971-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 7-292200, A (Du Pont-Mitsui Fluorochemicals Co., Ltd.), 7 November, 1995 (07. 11. 95), Claims ; page 2, left column, lines 36 to 44 ; page 4, right column, lines 1 to 8 (Family: none) | 1-31 |
| Y | JP, 8-109225, A (Asahi Glass Co., Ltd.), 30 April, 1996 (30. 04. 96), Claims ; page 2, right column, lines 36 to 43 (Family: none) | 1-31 |
| Y | JP, 7-304832, A (Ausimont S.p.A.), 21 November, 1995 (21. 11. 95), Claims & EP, 633274, A1 & US, 5463006, A | 1-31 |
| Y | JP, 7-70397, A (Du Pont-Mitsui Fluorochemicals Co., Ltd.), 14 March, 1995 (14. 03. 95), Claims ; page 2, lower left column, lines 34 to 40 & WO, 9501401, A1 & US, 5473018, A & EP, 706542, A1 | 1-31 |

☒   Further documents are listed in the continuation of Box C.     ☐   See patent family annex.

| *   Special categories of cited documents: | "T"   later document published after the international filing date or priority |
|---|---|
| "A"   document defining the general state of the art which is not considered to be of particular relevance |     date and not in conflict with the application but cited to understand the principle or theory underlying the invention |
| "E"   earlier document but published on or after the international filing date | "X"   document of particular relevance; the claimed invention cannot be |
| "L"   document which may throw doubts on priority claim(s) or which is cited to establish the publication date of another citation or other special reason (as specified) |     considered novel or cannot be considered to involve an inventive step when the document is taken alone |
| "O"   document referring to an oral disclosure, use, exhibition or other means | "Y"   document of particular relevance; the claimed invention cannot be considered to involve an inventive step when the document is combined with one or more other such documents, such combination |
| "P"   document published prior to the international filing date but later than the priority date claimed |     being obvious to a person skilled in the art "&"   document member of the same patent family |

| Date of the actual completion of the international search | Date of mailing of the international search report |
|---|---|
| 1 June, 1999 (01. 06. 99) | 15 June, 1999 (15. 06. 99) |

| Name and mailing address of the ISA/   Japanese Patent Office | Authorized officer |
|---|---|
| Facsimile No. | Telephone No. |

Form PCT/ISA/210 (second sheet) (July 1992)

## INTERNATIONAL SEARCH REPORT

| International application No. |
| --- |
| PCT/JP99/01125 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP, 2-286735, A (E.I. Du Pont de Nemours & Co.), 26 November, 1990 (26. 11. 90), Claims & EP, 395895, A & US, 5051479, A | 18-31 |
| Y | JP, 8-41267, A (Asahi Glass Co., Ltd.), 13 February, 1996 (13. 02. 96), Claims ; page 2, right column, lines 16 to 23 (Family: none) | 18-31 |
| Y | JP, 7-169334, A (The Furukawa Electric Co., Ltd.), 4 July, 1995 (04. 07. 95), Claims (Family: none) | 18-31 |
| Y | JP, 2-102247, A (Daikin Industries,Ltd.), 13 April, 1990 (13. 04. 90), Claims & EP, 362868, A & US, 5179167, A | 18-31 |
| Y | WO, 96/24625, A2 (E.I. Du Pont de Nemours & Co.), 15 August, 1996 (15. 08. 96), Claims & EP, 808336, A1 & JP, 10-513497, A | 18-22, 26-31 |
| Y | JP, 9-52920, A (E.I. Du Pont de Nemours & Co.), 25 February, 1997 (25. 02. 97), Claims & EP, 759446, A1 & US, 5677404, A | 18-22, 26-28, 30-31 |

Form PCT/ISA/210 (continuation of second sheet) (July 1992)